# EUROPEAN PATENT APPLICATION

(11) **EP 1 070 545 A2**
(43) Date of publication of application: **24.01.2001**
(21) Application number: 00115328.7
(22) Date of filing: 14.07.2000
(51) Int. Cl.: B05B 3/10, B01J 2/02

(54) **Method and apparatus for fabricating bichromal elements**

(30) Priority: 23.07.1999 US 360052
(71) Applicant: Xerox Corporation, Rochester, New York 14644 (US)
(72) Inventor: Richley, Edward A., Maryland 20877 (US)
(74) Representative: Grünecker, Kinkeldey, Stockmair & Schwanhäusser Anwaltssozietät

(57) **Abstract**

An apparatus for fabricating bichromal elements which has a separator member (14) having a central rotating point comprising first and second spaced apart, opposed surfaces (34,36) with an edge region in contact with both of the opposed surfaces (34,36). The apparatus (10) further includes an apparatus for dispensing first and second differently colored hardenable liquids substantially at the central rotating point of the first and second surfaces (34,36), respectively, and an apparatus for substantially uniformly spreading the liquid material over the first and second surfaces (34,36) toward said edge region to form a reservoir of liquid material outboard of said edge region which is comprised of side-by-side regions of the first and second differently colored hardenable liquids, and for forming ligaments from the reservoir.

## Description

### Background

This invention relates generally to forming bichromal elements to be used in a gyricon display, and more specifically provides a new method and apparatus for supplying hardenable liquid to the surfaces of a spinning disk configuration used to fabricate the bichromal elements.

Gyricon sheet material, also known as electric paper, is known in the art. U.S. Patent No. 4,126,854 describes how to make and use gyricon sheet material containing bichromal spherical elements. In essence, U.S. Patent No. 4,126,854 describes a thin transparent sheet having many of the attributes of paper. That is, the sheet is lightweight, flexible, can be easily read in ambient light, and retains displayed information for long periods of time with needing to refresh the displayed information.

The sheet comprises an elastomeric host material which is heavily loaded with substantially hemispherically colored bichromal spherical elements. Each hemisphere is differently colored, such as black and white, red and white or any other combination of colors desired. Each element is further contained within its own substantially spherical cavity in a dielectric liquid. When an electric field is placed across the sheet material the elements rotate such that they line up with the electric field. The elements can therefore be rotated to display either colored hemisphere or even to display a portion of both hemispheres.

U.S. Patent No. 5,825,529 describes another embodiment of gyricon material. As described in U.S. Patent No. 5,825,529, the spherical elements are closely packed in a stable arrangement, such as a hexagonally packed monolayer directly in the dielectric liquid. The elements in the dielectric fluid are then sandwiched between two retaining members and sealed in. In operation, this embodiment works as described above.

EP 0942405 describes yet another embodiment of gyricon sheet material. A sheet material is described similar in nature to the sheet material described in U.S. Patent No. 4,126,854. However, in EP 0942405 several different populations of bichromal elements are used to implement grey scale, highlight color and additive full color. The different populations of the bichromal elements are disposed in addressable subpixel areas.

U.S. Patent No. 6055091 describes yet another embodiment of a display utilizing rotating bichromal elements. In this document a display is described which uses substantially cylindrical elements. As in the earlier described embodiments, the cylinders reside in a dielectric liquid and their orientation can be changed by applying an electric field.

What each of these embodiments have in common is that all use a rotating bichromal element. Many methods are known in the art for forming bichromal elements, for instance, monochromatic elements may first be formed and then coated from one direction in a vacuum evaporation chamber. U.S. Patent No. 5,262,098 describes a method using a spinning disk technique. In essence, a hardenable liquid is fed to each of the surfaces of a spinning disk. The hardenable liquids meet at the edge of the disk and form a bichromal ligament that is propelled away from the disk. The distal end of the bichromal ligament breaks up into droplets forming bichromal spheres. In a variation on this method described in U.S. Patent No. 6055091, high-viscosity hardenable liquids are used to create bichromal cylinders.

In both cases, two different hardenable liquids must be supplied to the spinning disk, one to each of the opposed surfaces. U.S. Patent No. 5,262,098 describes a feed mechanism which uses a rotatable dispensing assembly with two liquid metering
members with the rotatable disk supported therebetween. The lower metering member includes a spindle portion, mountable upon and rotatable by a motor, a coupling extension having a central bore for receiving liquid, a number of radially extending, upwardly angled liquid supply ports, a circular reservoir, and a circular metering lip for delivering a thin layer of liquid to the lower surface of the spinning disk. The upper metering member encircles the coupling extension and is secured in place by a locking nut. The upper metering member contains an inner groove communicating with a number of radially extending, downwardly angled liquid supply ports which in turn, communicate with a circular reservoir and a circular metering lip for delivering a thin layer of liquid to the upper surface of the disk. A stationary liquid delivery assembly is seated upon the rotatable dispensing assembly for delivering the two liquids to their respective surfaces of the disk.

While the feed mechanism is quite satisfactory for delivering the two liquids to their respective surfaces of the disk, during periods of extended use, the system tends to clog preventing proper dispensing of the liquids to their respective surfaces. The present invention provides an improved apparatus and method of use which exhibits reduced clogging when used for extended periods of time.

Further advantages of the invention will become apparent as the following description proceeds.

### Summary of the Invention

Briefly stated and in accordance with the present invention, there is provided an apparatus for fabricating bichromal elements which has a separator member having a central rotating point comprising first and second spaced apart, opposed surfaces with an edge region in contact with both of the opposed surfaces. The apparatus further includes an apparatus for dispensing first and second differently colored hardenable liquids substantially at the central rotating point of the first and second surfaces, respectively, and an apparatus for substantially uniformly spreading the liquid material over the first and second surfaces toward said edge region to form a reservoir of liquid material outboard of said edge region which is comprised of side-by-side regions of the first and second differently colored hardenable liquids, and for forming ligaments from the reservoir.

In a further embodiment, the heat source comprises a radiant shroud heater.

In a further embodiment, the heat source comprises a clam-shell heater.

In a further embodiment, the apparatus for dispensing first and second differently colored hardenable liquids substantially at the central rotating point of the first and second surfaces, respectively includes controlling the dispensing rate of each stream.

In a further embodiment, the apparatus for substantially uniformly spreading the liquid material over the first and second surfaces toward said edge region to form a reservoir of liquid material outboard of said edge region, and for forming ligaments from said reservoir includes forming a reservoir of liquid material outboard of said edge region which is comprised of side-by-side regions of substantially equal portions of said first and second differently colored hardenable liquids.

### Brief Description of the Drawings

Figure 1 is a side view of a spinner according to the present invention.
Figure 2 is an enlargement of one-half of the spinner shown in Figure 1 illustrating the delivery of a hardenable liquid material to the spinner.
Figure 3 is an enlargement of one-half of the spinner shown in Figure 1 illustrating further the process of using the spinner.
Figure 4 is an enlargement of an edge region of the spinner shown in Figure 1 illustrating the formation of spheres.
Figure 5 is a top view of the spinner shown in Figure 1 illustrating the formation of fine bichromal cylinders.

### Detailed Description of the Invention

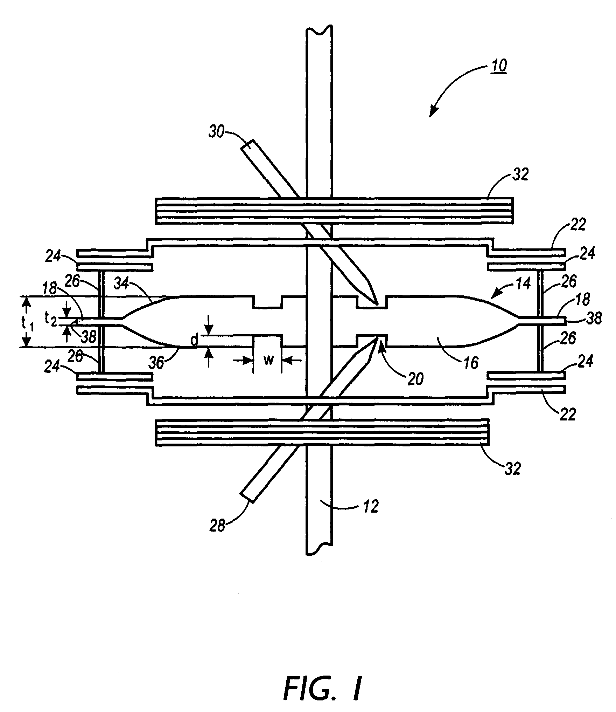

Turning now to Figure 1, a side view of a spinner 10 is shown. A separator member 14 is attached to a hollow rotating shaft 12. The rotating shaft 12 can be either driven directly by any suitable hollow drive motor or indirectly by using any suitable motor in conjunction with a belt (not shown). The separator member 14 is symmetric. The thickness of the separator member 14 is shown as separator member thickness t. The separator member 14 has two opposed surfaces 34, 36 both in contact with an edge region 38 and a separator member 14. Attached to separator member 14 via rotating shroud support members 26 are two rotating shrouds 24, one adjacent to but separated from each of the surfaces 34, 36. Outside of each of the stationary shrouds 22 are two heat sources.

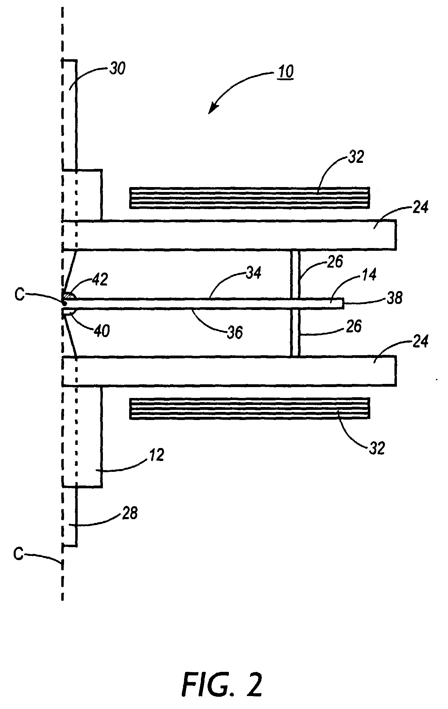

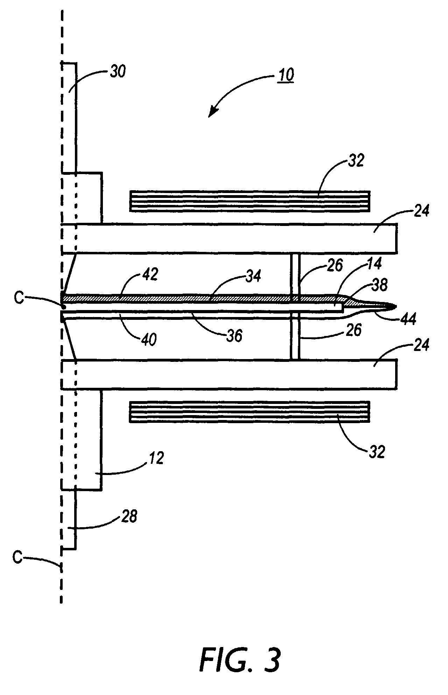

For illustrative purposes only, Figures 2 and 3 show only one half of the spinner 10, as cut through the rotating shaft 12 and the liquid feed nozzles 28, 30 on centerline C. Figures 2 and 3 illustrate the operating characteristics of the spinner 10. Two streams of a hardenable liquid material 40, 42 are dispensed through liquid feed nozzles 28, 30 whose ends direct the hardenable liquid material 40, 42 to the separator member center Sc on each of the surfaces 34, 36 as shown in Figure 2. The hardenable liquid material 40, 42 then begins to flow out onto the surfaces 34, 36 of the separator member 14. The hardenable liquid material 40, 42 then flows to the ends of the surfaces 34, 36 and over the edge 38 where they form an outboard reservoir of liquid material. By controlling the dispensing rate of each it is possible to substantially equalize the flow rate at which the hardenable liquid materials 40, 42 reach the edge region 38, thus enabling the reservoir to include substantially equal amounts of each of the hardenable liquid materials 40, 42.

It should be noted that the hardenable liquid materials 40, 42 adhere to each other but do not intermix, so that the reservoir includes side-by-side portions of each hardenable liquid material 40, 42. If the flow rates of the of the hardenable liquid materials 40, 42 are not substantially equal then although a reservoir will still be formed it will not include substantially equal amounts of each of the hardenable liquid materials 40, 42. The resulting bichromal elements will not have roughly hemispheric portions of each of the hardenable materials but one material will comprise a portion larger than hemispheric while the other material will comprise a portion smaller than hemispheric. When the rate of flow of the liquids away from the edge 38, into the host fluid (air is shown), is great enough, free jets 44 are formed as shown in Figure 3. However, we want the flow rates to be substantially equal.

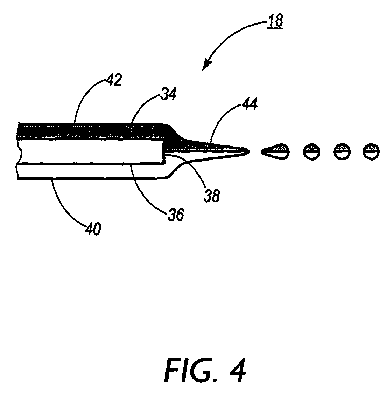

Each jet 44 comprises a ligament of liquid fed by the reservoir at its originating end and breaking up into side-by-side substantially bichromal spheres at its distal end as shown in Figure 4. As the substantially bichromal spheres continue in their flight, they harden and drop under the influence of gravity, and are finally collected.

It has been found that a 3 inch diameter disk shaped separator member 14 about 20 mils thick, rotated at about 2600 to 3000 rpm successfully produces substantially bichromal spheres about 4 mils in diameter. Two approximately 0.60 "diameter nozzles were used for the liquid feed nozzles 28, 30. It is important that the liquid feed nozzles 28, 30 feed onto the separator member center Sc to ensure substantially uniform azimuthal wetting of the surfaces 34, 36. A tolerance of approximately ½ of the liquid feed nozzle 28, 30 diameter from the separator member center is acceptable. However, should the liquid feed nozzles 28, 30 supply the hardenable liquid materials 42, 44 at greater distances from the separator member center Sc then the surfaces 34, 36 will not wet uniformly but will show a spiral pattern from the separator member center Sc outward which will interfere with proper substantially bichromal sphere production.

At slower rotational speeds larger spheres are produced while at higher rotational speeds smaller spheres are produced. It should be noted that at too high rotational speeds, the liquids come off their respective surfaces at the square edge without flowing together, resulting in smaller black and white monochrome spheres. Of course, it is known that suitable modifications may be made to the square edge to allow the liquids to flow together at higher speeds, e.g. rounding or tapering the edge.

Liquid flowing over the edge of the separator member 14 tends to form an outboard reservoir in the form of a ring of non-uniform diameter. This ring moves at the same speed as the separator member 14 and has circumferential protrusions, known as "Taylor instabilities", caused by the centrifugal force acting against surface tension. Initially, as the liquids form the reservoir, the protrusions or ligaments are formed. As more material is fed into the reservoir, each ligament starts to peak, and finally will release a large droplet of the liquid which is attached to the ligament. Finally, the large drop breaks away followed by smaller droplets. A relatively stable steady state condition then exists, with liquid being fed into the reservoir and into the ligaments, and substantially uniform droplets being ejected into the host fluid from the distal ends of the ligaments. This inertial structure of spinning ligaments trailing the separator member 14 is held together by surface tension, which also causes their distal ends to be unstable and to break up into droplets. It is not necessary that the circumference of the separator member 14 be regular. In fact, a circumferential toothed structure will cause the "Taylor instabilities" and the resultant ligaments to be located coincident with each tooth. This allows a tailoring of the ligament structure and some added control over the size of the substantially bichromal spheres.

As has been described above, the hardenable liquids 42, 44 are first deposited at the separator member center Sc associated with each surface 34, 36. The separator member 14 has a separator member thickness t which is small enough to ensure combining of the two streams of the hardenable liquid materials 34, 36 into a reservoir. If the separator member thickness t is too large, the hardenable liquid materials 40, 42 will not combine at the edge region 38 and only monochromal spheres will be produced. For example, a 3 inch diameter disk shaped separator member 14 rotated at about 2600 to 3000 rpm, a separator member thickness t of approximately less than 30 mils is desired. If the separator member is rotated at faster speeds, then a separator member thickness t of less is desired while if the separator member 14 is rotated at slower speeds than a separator member thickness t which is greater may be tolerated.

The hardenable liquids may be delivered to separator members in a heated, molten state. For example, if pigmented carnauba waxes are used then the waxes should be delivered at a temperature of about 110 degrees C. This is so that the hardenable liquids may flow freely and do not harden prematurely, i.e. long enough to prevent the ligaments from freezing. To guard against premature cooling, four heating sources 32 are placed in proximity to the separator member 14. Several types of heating sources 32 are suitable, for example, an induction heater, a radiant shroud heater, or a clam-shell type heating structure surrounding the separator member 14 may all be used. While heating the separator member 14 is important to prevent premature hardening of the hardenable liquids, it must be noted that the heating should be confined to the area immediately surrounding the separator member 14 or hardening of the spheres may be delayed or prevented.

A significant decrease in yield of substantially hemispherical bichromal spheres can be caused due to a spiraling of the ligaments. This problem is attributed to air turbulence and differential air flow caused by the effects of wind resistance at the edge of the disk, because the air adjacent to the disk is moving at a different velocity than the ligaments. Furthermore the air can be turbulent in this region. The rotating shrouds 24 prevent this problem, resulting in a greatly increased yield. The rotating shrouds 24 are mounted to the separator member 14 by rotating shroud support members 26, so that they are closely spaced from the surfaces of the separator member 14 and extend radially outwardly of the separator member 14. This causes the air between the shrouds to move as a unit with the spinning separator member 14, presenting relatively quiescent air moving with the ligaments and the substantially bichromal spheres. An example of the experimental dimensions of these elements is as follows: a 10 mil separator member 14, 3 inches in diameter has 5 inch diameter shroud discs spaced 90 mils apart, i.e. each is spaced of about 35 mils from its respective surface of the separator member 14. However, satisfactory results have also been obtained when the shroud discs are spaced 250 apart, i.e., each is spaced of about 110 mils from its respective surface of the separator member 14.

While it has been stated that the liquid material should not solidify prematurely, it is also understood that the substantially bichromal spheres should solidify as soon as possible after formation. Cooling may be accelerated by having the substantially bichromal spheres pass through a cooling zone. This has been accomplished experimentally by placing trays containing liquid nitrogen, beneath the spinning separator member 14 so that the substantially bichromal spheres move through the cold liquid nitrogen vapors shortly after being formed. This ensures hardening at the appropriate location.

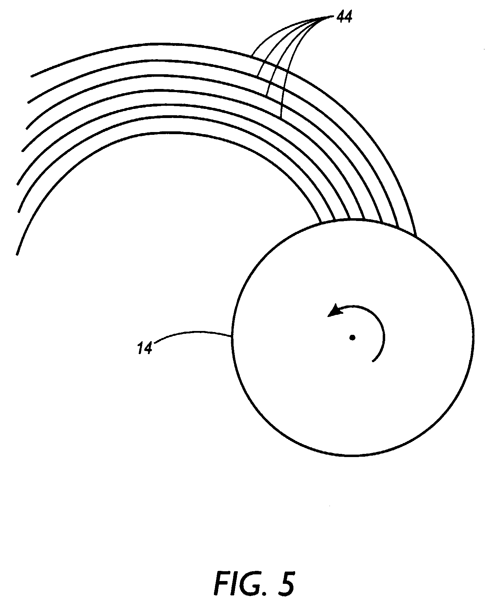

However, in an alternative use, high-viscosity hardenable liquids are used to create bichromal cylinders, If high-viscosity hardenable liquids are used the result is achieved as shown in Figure 5. The ligaments 44 formed by high-viscosity hardenable liquids do not break up into droplets but harden in place to form fine substantially cylindrical bichromal filaments. The filaments can then be aligned and separated into substantially bichromal cylinders.

## Claims

1. An apparatus for fabricating bichromal elements comprising:
a) a separator member having a central rotating point comprising first and second spaced apart, opposed surfaces with an edge region in contact with both of said opposed surfaces,
b) apparatus for dispensing first and second differently colored hardenable liquids substantially at the central rotating point of the first and second surfaces, respectively, and
c) apparatus for substantially uniformly spreading the liquid material over the first and second surfaces toward said edge region to form a reservoir of liquid material outboard of said edge region which is comprised of side-by-side regions of said first and second differently colored hardenable liquids, and for forming ligaments from said reservoir.

2. The apparatus of claim 1 wherein the apparatus for substantially uniformly spreading the liquid material in the cups and over the first and second surfaces to form a reservoir of liquid from which ligaments are formed comprises a motor for spinning said separator member.

3. The apparatus of claim 1 further comprising means for causing the air in the vicinity of said separator member to move as a unit with said separator member.

4. The apparatus of claim 1 further comprising a pair of rotating shrouds for causing the air in the vicinity of said separator member to move as a unit with said separator member.

5. The apparatus of claim 4 wherein the pair of rotating shrouds are moveable as a unit with said separator member, each shroud being spaced axially relative thereto and extending radially outwardly therefrom.

6. The apparatus of claim 1 wherein the spacing of the first and second opposed surfaces at the edge region is sufficient to insure that the first and second differently colored liquids combine to form a reservoir.

7. The apparatus of claim 1 wherein the spacing of the first and second opposed surfaces at the edge region is less than 30 mils.

8. The apparatus of claim 7 wherein the spacing of the first and second opposed surfaces at the edge region is approximately 20 mils.

9. The apparatus of claim 1 further comprising a heat source in the proximity of but separated from the separator member to prevent premature cooling of the first and second hardenable liquids.

10. The apparatus of claim 9 wherein the heat source comprises an induction heater.
